# EUROPEAN PATENT APPLICATION

(11) **EP 4 492 263 A1**
(43) Date of publication of application: **15.01.2025**
(21) Application number: 23766458.6
(22) Date of filing: 15.02.2023
(51) Int. Cl.: G06F 17/10, G06F 15/80, G06N 3/063

(54) **CALCULATION DEVICE AND CALCULATION METHOD**

(30) Priority: 09.03.2022 JP 2022036319
(71) Applicant: DENSO CORPORATION, Kariya-city, Aichi-pref., 448-8661 (JP)
(72) Inventor: TAKEDA Seidai, Tokyo 108-0075 (JP)
(74) Representative: Winter, Brandl - Partnerschaft mbB
(86) International application number: PCT/JP2023/005297
(87) International publication number: WO 2023/171278

(57) **Abstract**

The calculation device (10) includes multiple PEs (12), each of which performs an operation for each of multiple tiles into which the input data is divided. The PEs (12) continuously perform layer-by-layer convolution operation for the tiles in multiple layers. The **PE** (12) sends the overlap data required for the operation of the subsequent layer to the adjacent **PE** (12) every time the convolution operation for each layer is completed, and performs the convolution operation for the subsequent layer based on the overlap data received from the adjacent **PE** (12) and the calculation result of the previous layer. The convolution operation is performed based on the overlap data received from the adjacent **PE** (12) and the calculation result of the previous layer.

## Description

### TECHNICAL FIELD

The present disclosure relates to a calculation device and a calculation method.

### CROSS REFERENCE TO RELATED APPLICATION

This application is based on Japanese Patent Application No. 2022-036319 filed on March 9, 2022, the disclosure of which is incorporated herein by reference.

### BACKGROUND ART

In recent years, research and development on convolutional neural network (CNN) is being promoted. For example, an arithmetic device has been developed in which multiple arithmetic units arranged in a two-dimensional array are processed in parallel distributed manner, and each arithmetic unit performs a convolution operation on each of multiple data elements (hereinafter referred to as "tiles") into which input data is divided.

Non-Patent Literature 1 proposes a hardware acceleration method for CNN that performs convolution operation on input data by fusing multiple layers without writing the data (intermediate data) obtained from layer-by-layer arithmetic operation to an external memory. The method described in Non-Patent Literature 1 deletes the amount of data transmitted to an external memory by continuously executing convolution operation for each tile in the layer direction, which is referred to as Fuse execution in the following description.

### PRIOR ART LITERATURES

### NON-PATENT LITERATURE

Non-Patent Literature 1: M. Alwani, H. Chen, M. Ferdman, and P. A. "Fused-Layer CNN Accelerators", 2016 49th Annual IEEE/ACM International Symposium on Microarchitecture (MICRO)

### SUMMARY

### PROBLEM TO BE SOLVED

The CNN requires an overlap region where the perimeters of adjacent two tiles overlap with one another. The overlap region indicates data which is necessary for execution of convolution operation using a sliding filter (sliding window). The overlap region is also referred to as overlap data. Therefore, when the CNN is executed by an arithmetic device in which multiple arithmetic units are arranged in a two-dimensional array, each arithmetic unit and adjacent arithmetic unit, which perform layer-by-layer arithmetic operations, are required to perform arithmetic operations on the overlap data.

Since the Fuse execution does not write the intermediate data in the external memory, a divided data region to be processed in the first layer is determined by assuming, in advance, the overlap data, which is the overlap region needed in the last layer.

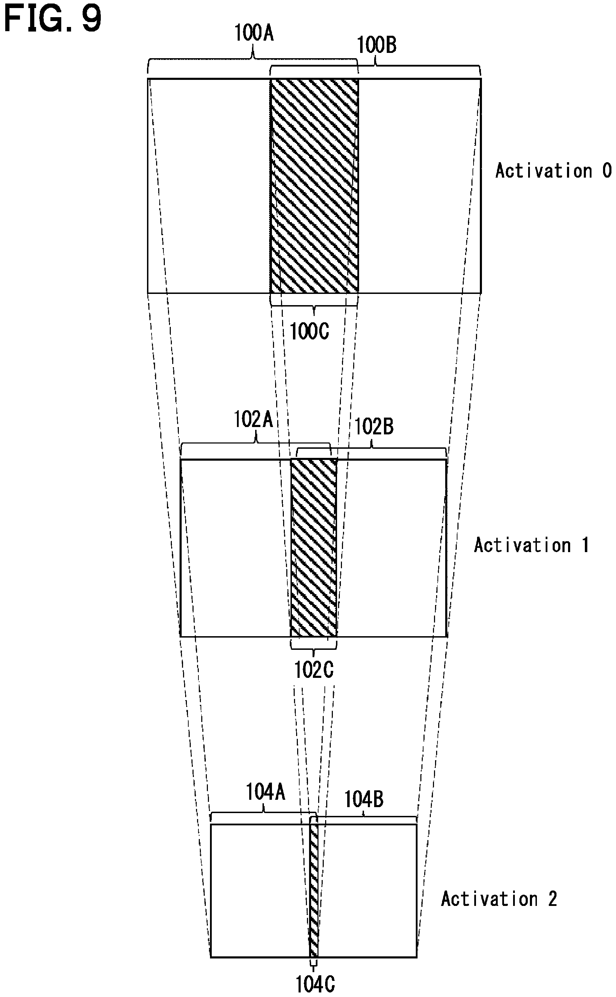

The overlap data in a conventional Fuse execution will be explained with reference to FIG. 9. In FIG. 9, Activation 0, Activation 1, and Activation 2 each corresponds to arithmetic operation executed by one layer. That is, when the arithmetic operation executed by the first layer is Activation 0, then Activation 1 is the arithmetic operation executed by inputting an arithmetic operation result of the Activation 0 into the next layer, and Activation 2 is the arithmetic operation executed by inputting an arithmetic operation result of the Activation 1 into the next layer. In FIG. 9, Activation 2 is the arithmetic operation executed by the last layer.

The overlap data of data 100A and data 100B, which is the target of arithmetic operation in the Activation 0, is the data 100C. The overlap data of data 102A and data 102B, which is the target of arithmetic operation in the Activation 1, is the data 102C. The overlap data of data 104A and data 104B, which is the target of arithmetic operation in the Activation 2, is the data 104C. In Fuse execution, as described above, no intermediate data is written to the external memory. Thus, the data region of overlap data 100C in Activation 0 is determined by assuming, in advance, the overlap data 102C, 104C needed at each layer up to Activation 2, which corresponds to the last layer.

Therefore, in Fuse execution, the volume of overlap data increases with an increase of the number of layers, thereby increasing the processing load of arithmetic operation for the overlap data. As a result, it becomes difficult to reduce execution time of arithmetic operation in Fuse execution, and a power-to-performance ratio is deteriorated.

In view of the above difficulty, an object of the present disclosure is to provide a calculation device and a calculation method that can reduce overlap operation executed by the adjacent processing elements in convolution operation of fuse execution.

### MEANS FOR SOLVING PROBLEM

In order to achieve the above-described object, the present disclosure provides the following measures. The reference symbols in parentheses described in claims indicate correspondence to the concrete means described in the embodiment, and the concrete means is described as an example. Thus, the technical scope of the present disclosure is not necessarily limited thereto.

According to an aspect of the present disclosure, a calculation device includes multiple processing elements, each of which performing an arithmetic operation on each of multiple divided data elements. The multiple divided data elements are generated by dividing input data input to the calculation device. Each of the multiple processing elements continuously performs a convolution operation on the corresponding divided data element in each of multiple layers. Each of the multiple processing elements includes: an arithmetic unit performing the convolution operation on the corresponding divided data element in each of the multiple layers; a sender sending data to an adjacent processing element, which is one of the multiple processing elements; and a receiver receiving data from the adjacent processing element. When the convolution operation is completed in one of the multiple layers, each of the multiple processing elements sends, to the adjacent processing element, predetermined data necessary for the convolution operation in the subsequent layer and performs the convolution operation in the subsequent layer based on the predetermined data received from the adjacent processing element and calculation result of the previous layer.

According to the above configuration, overlap operation executed by the adjacent processing elements in convolution operation of Fuse execution can be suppressed. As a result, the above-described configuration can reduce the amount of operation executed in convolution operation, shorten the execution time of operation, and improve the power-to-performance ratio.

According to another aspect of the present disclosure, a calculation method executed by a calculation device is provided. The calculation device includes multiple processing elements, each of which performing an arithmetic operation on each of multiple divided data elements. The multiple divided data elements are generated by dividing input data input to the calculation device. Each of the multiple processing elements continuously performs a convolution operation on the corresponding divided data element in each of multiple layers. The calculation method includes: a first process in which each of the multiple processing elements performs the convolution operation on the corresponding divided data element input to each of the multiple processing elements in each of the multiple layers; a second process of sending, to an adjacent processing element which is one of the multiple processing elements, predetermined data necessary for the convolution operation in the subsequent layer every time the convolution operation is completed in one of the multiple layers; and a third process in which each of the multiple processing elements performs the convolution operation in the subsequent layer based on the predetermined data received from the adjacent processing element and calculation result of the previous layer.

### TECHNICAL EFFECTS

According to the present disclosure, the number of overlap operations executed by the adjacent processing elements in the convolution operation of Fuse execution can be reduced.

### BRIEF DESCRIPTION OF DRAWINGS

FIG. 1 is a schematic diagram showing a configuration of a calculation device according to a first embodiment.
FIG. 2 is a schematic diagram showing a configuration of PEs according to the first embodiment.
FIG. 3 is a schematic diagram showing a sending and reception of overlap data by the PE according to the first embodiment, and (A) shows a start layer and (B) shows the second and subsequent layers.
FIG. 4 is a schematic diagram showing tile assignment to PEs according to a second embodiment.
FIG. 5 is a schematic diagram showing exchange of overlap data from the start layer to the last layer according to the second embodiment.
FIG. 6 is a functional block diagram of an information processing device according to a second embodiment.
FIG. 7 is a schematic diagram showing another example of tile assignment to PEs according to the second embodiment.
FIG. 8 is a schematic diagram showing tile assignment to PEs according to a third embodiment.
FIG. 9 is a schematic diagram showing overlap data in a conventional Fuse execution.

### DESCRIPTION OF EMBODIMENTS

The following will describe embodiments of the present disclosure with reference to the drawings. The embodiments described below show an example of the present disclosure, and the present disclosure is not limited to the specific configuration described below. In an implementation of the present disclosure, a specific configuration according to the embodiments may be adopted as appropriate.

### (First Embodiment)

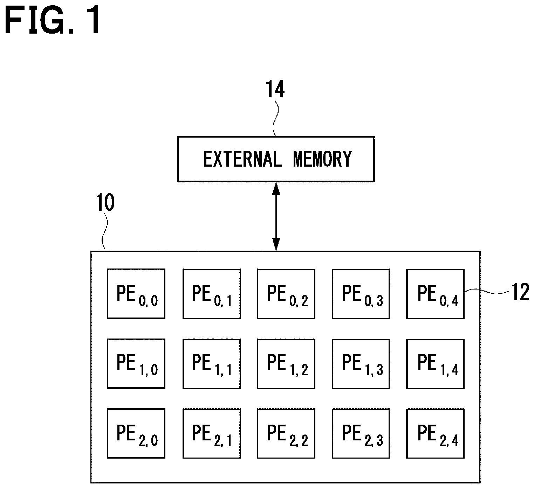

FIG. 1 shows a schematic configuration of a calculation device 10 according to the present embodiment. The calculation device 10 of the present embodiment includes multiple processing elements 12 (hereinafter referred to as PEs), which are provided by arithmetic units. The calculation device 10 performs arithmetic operations based on a convolutional neural network (CNN). Each PE 12 divides the input data, which is multi-dimensional array data, into multiple elements of division data (hereinafter referred to as "tiles"). The convolution operation is performed for each input tile by parallel distributed processing. As an example, in the present embodiment, the number of tiles into which the input data is divided is the same as the number of PEs 12 included in the calculation device 10. The multi-dimensional array data is also referred to as tensor data. In the present embodiment, image data will be described as an example of the tensor data. Multi-dimensional array data is not limited to 3-dimensional array data, such as image data. The multi-dimensional array data may be any n-dimensional array data.

The PEs 12 are arranged in a two-dimensional array of n rows by m columns, and perform parallel distributed processing. To distinguish each PE 12 from one another, as an example, the PE 12 located in the upper left on a drawing sheet of FIG. 1 is numbered n = 0 and m = 0. The index n increases toward the lower side on the drawing sheet of FIG. 1, and the index m increases toward the right on the drawing sheet of FIG. 1. In FIG. 1, as an example, the calculation device 10 includes 15 PEs 12 arranged in three rows and five columns. The number and arrangement of PEs 12 is not limited to the example shown in FIG. 1.

The calculation device 10 performs CNN on the data (e.g., image data), which is input from the external memory 14, and outputs the calculation results to the external memory 14.

In the calculation device 10 according to the present embodiment, the PE 12 continuously performs layer-by-layer convolution operations to the tile (hereinafter referred to as "Fuse execution"). In Fuse execution, the intermediate data, which is the intermediate result of the layer-by-layer convolution operation performed to tile, is not written to the external memory 14. This configuration can reduce the amount of data transmitted to the external memory 14, and thus can reduce the execution duration of CNN operation.

In the present embodiment, the CNN is performed by the calculation device 10 having multiple PEs 12 arranged in a two-dimensional array. When each PE 12 performs the layer-by-layer operation, data that overlaps between two adjacent PEs 12 (hereinafter referred to as "overlap data") is required to be calculated by the PE. The overlap data is needed for execution of convolution operation, which uses a sliding filter (hereinafter also referred to as "sliding window").

Since the conventional Fuse execution does not write the intermediate data to the external memory 14, the conventional Fuse execution determines a division data region to be processed in the first layer by assuming, in advance, an overlap data region that is needed in the last layer. Therefore, in the conventional Fuse execution, the volume of overlap data increases with an increase of the number of layers, thereby increasing the processing load of arithmetic operation for the overlap data. In the following description, the first layer is referred to as the start layer and the last layer is referred to as end layer.

The calculation device 10 in the present embodiment allows data sending and data reception with the adjacent PEs 12. The PE 12 sends, to the adjacent PE12, data needed in the next layer calculation to be performed by the adjacent PE 12. The data needed in the next layer is the data that overlaps between two adjacent PEs 12. Specifically, the data needed in the next layer is periphery part of the data obtained by the convolution operation performed in each layer by the PE 12, and is determined based on a size of the sliding window.

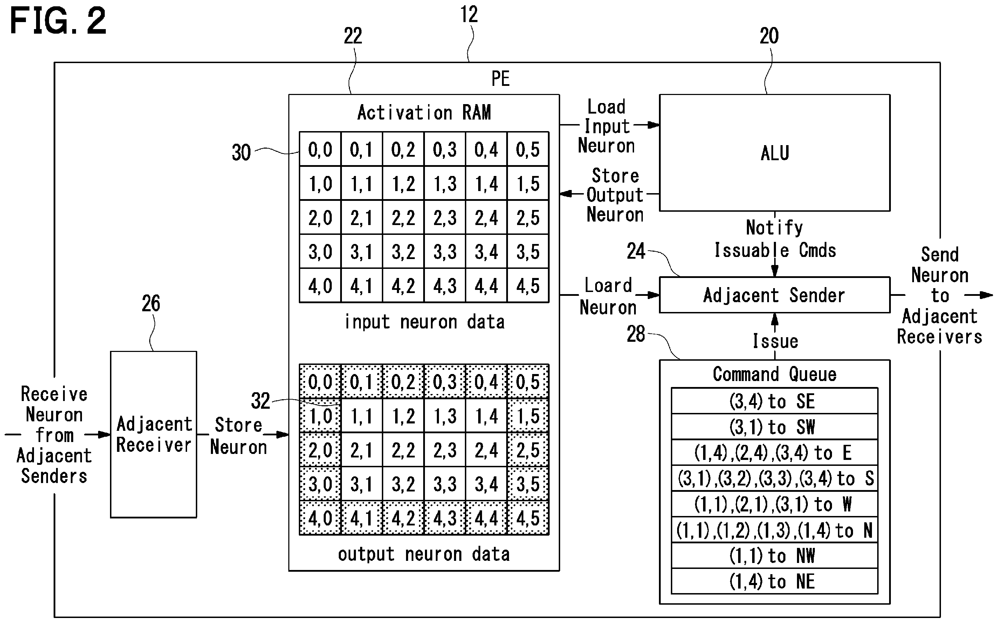

FIG. 2 shows a schematic diagram of the PE 12.

Each PE 12 has an ALU (Arithmetic and Logic Unit) 20, an internal RAM (Random Access Memory) 22, a sender 24, a receiver 26, and a queue 28.

The ALU 20 is an arithmetic unit that performs layer-by-layer convolution operation on the input tile. The ALU 20 in the present embodiment performs Fuse execution on the input tile.

The internal RAM 22 is a storage medium that stores the results of layer-by-layer calculation of Fuse execution, data received from other PEs 12, and other data.

The sender 24 sends data to the adjacent PEs 12. The receiver 26 receives data from the adjacent PEs 12. The PE 12 sends or receives overlap data to or from the adjacent PE 12 via the sender 24 and the receiver 26.

In the queue 28, commands, each of which indicates a relationship between the overlap data to be sent and the destination PE 12 to which the overlap data is to be sent, are registered. The sender 24 sends the overlap data to the adjacent PEs 12 according to the command registered in the queue 28.

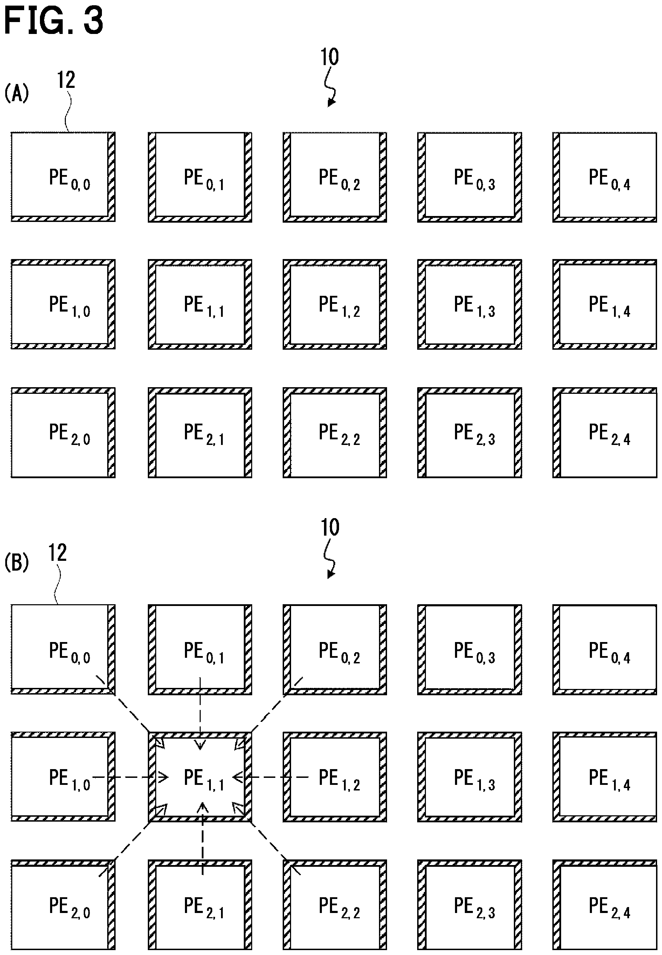

The following will describe sending and reception of overlap data by the PE 12, which is performed in the Fuse execution according to the present embodiment, with reference to FIG. 2 and FIG. 3.

The data input to the start layer of the multiple layers is multiple tiles, which are generated by dividing the input data into multiple elements. In the following description, the data units that configure the tile are also referred to as neuron data. The neuron data that configures the tile, which is input to the PE 12, is referred to as input neuron data. The neuron data that configures the result of convolution operation performed by the PE 12 is referred to as output neuron data.

The tile input to the PE 12 in the present embodiment includes overlap neuron data between the adjacent PE 12 so that only the convolution operation by the start layer can be executed. In the present embodiment of Fuse execution, overlap data is received from the adjacent PE 12 in the second and subsequent layer operation. Thus, there is no need to include the overlap data in the tile corresponding to the number of layers as in conventional Fuse execution. However, the tile that is the target of operation in the start layer cannot receive overlap data from the adjacent PE 12. Thus, the tile that is the target of operation in the start layer is required to include the overlap data in advance. The tiles generated from the input data are assigned to the PEs 12 so that the neuron data does not overlap in the second and subsequent layers of convolution operation, but the tile to be processed in the start layer includes the neuron data that overlaps with the adjacent PE 12.

The ALU 20 of each PE 12 performs layer-by-layer operation on the tile, which include multiple pieces of input neuron data 30, and stores the operation result, which corresponds to the output neuron data 32, in the internal RAM 22. In FIG. 2, regions indicated by "0, 0" to "4, 5" indicate respective locations of multiple pieces of input neuron data 30 that are included in the tile.

The input neuron data30 is stored in the internal RAM22, and then output to the ALU 20, where layer-by-layer convolution operation is performed. The output neuron data 32 is then output from the ALU 20 as a result of the convolution operation on the input neuron data 30, and the output neuron data 32 is stored in the internal RAM 22. The output neuron data 32, shown in white background in FIG. 2, is the result of the convolution operation of the input neuron data 30.

The PE 12 sends the output neuron data 32, which is the overlap data, to the adjacent PE 12 every time the convolution operation corresponding to the layer is completed. The overlap data corresponds to the periphery data of output neuron data 32 obtained by calculation executed as described above. In the example shown in FIG. 2, among the output neuron data 32, the overlap data includes "1, 1", "1, 2", "1, 3", "1, 4", "2, 1", "2, 4", "3, 1", "3, 2", "3, 3", and "3, 4".

Then, the overlap data is sent to the adjacent PE 12 based on the registered relationship in the queue 28. In the example shown in FIG. 2, the output neuron data 32 in "3, 4" is sent to the adjacent PE 12 on lower right side (SE: South East). The output neuron data 32 in "3, 1" is sent to the adjacent PE 12 on lower left side (SW: South West). The output neuron data 32 in "1, 4", "2, 4", and "3, 4" are sent to the adjacent PEs 12 on the right side (E). The output neuron data 32 in "3, 1", "3, 2", "3, 3", and "3, 4" are sent to the adjacent PEs 12 on the lower side (S). The output neuron data 32 in "1, 1", "2, 1", and "3, 1" are sent to the adjacent PEs 12 on the left side (W). The output neuron data 32 in "1, 1", "1, 2", "1, 3", and "1, 4" are sent to adjacent PEs 12 on the upper side (N: North). The output neuron data 32 in "1, 1" is sent to the adjacent PE 12 on the upper left side (NW). The output neuron data 32 in "1, 4" is sent to the adjacent PE 12 on the upper right side (NE).

FIG. 3 is a schematic diagram showing sending and receiving of overlap data by the PE 12. FIG. 3 shows, in (A), the tiles for which convolution operations are to be performed by respective PEs 12 in the start layer. The hatched region indicates the overlap data that overlaps with the adjacent PE 12. The start layer corresponds to Activation 0 shown in FIG. 9.

FIG. 3 shows, in (B), the case where the PE 12 receives overlap data from the adjacent PE 12 before execution of the second and subsequent layer operation. As an example, the overlap data received by the PE 12 located in "1, 1" is indicated by arrows. The operation shown in (B) of FIG. 3 corresponds to Activation 1 shown in FIG. 9. Thus, the PE 12 in "1, 1" receives overlap data from the adjacent PEs 12 adjacent to the upper side, lower side, left side, lower right side, lower left side, upper right side, and lower right side.

When the PE 12 receives overlap data from the adjacent PEs 12, the PE 12 performs the convolution operation in the next layer based on the convolution operation result of the previous layer and the overlap data received from the adjacent PEs 12. Specifically, the ALU 20 included in the PE 12 configures a tile by mapping the overlap data received from the adjacent PEs 12 around the operation result of the previous layer, that is, by combining the overlap data with the operation result of previous layer, and then performs the convolution operation of the next layer based on the combined tile.

For example, in the output neuron data 32 shown in FIG. 2, the neuron data in regions of "0, 0 " to "0, 5", "1, 0", "1, 5", "2, 0", "2, 5", "3, 0", "3, 5", "4, 0" to "4, 5", which are indicated by the hatching lines, are the overlap data received from adjacent PEs 12. As shown in FIG. 2, the received overlap data are combined with the output neuron data 32 output by the PE 12 to generate the input neuron data 30, which is the target of the convolution operation to be performed in the next layer.

The sending time of overlap data from the PE 12 to the adjacent PEs 12 is at the end of each layer convolution operation by the PE 12 and the destination PE 12 is ready to receive the overlap data. The calculation results of operations in the end layer obtained by the Fuse execution at each PE 12 are stored in the external memory 14.

As explained above, the calculation device 10 in the present embodiment performs CNN by Fuse execution. Then, the PE 12 included in the calculation device 10 sends, to the adjacent PE 12, the overlap data needed in the next layer operation to be performed by the adjacent PE 12 every time the layer-by-layer convolution operation is completed. The PE 12 performs the convolution operation in the next layer based on the overlap data received from the adjacent PEs 12 and the operation result of the previous layer. Each PE 12 repeats this sending and reception of overlap data as long as the layer of Fuse execution continues.

With the above-described configuration, the calculation device 10 in the present embodiment can obtain the overlap data needed in each layer from the adjacent PEs 12, thereby reducing the number of duplicate operations executed in adjacent two PEs 12 for performing the convolution operation by Fuse execution. As a result, the calculation device 10 of the present embodiment can reduce the operation amount of convolution operation, and shorten the execution duration of convolution operation, thereby improving the power-to-performance ratio.

### (Second Embodiment)

The following will describe a second embodiment of the present disclosure. In the present embodiment, the number of tiles generated from the input data is larger than the number of PEs 12 provided in the calculation device 10.

The calculation device 10 in the present embodiment performs a loop process that assigns multiple tiles to each PE 12 and performs operations to all of the tiles by performing multiple times of loop. The calculation device 10 in the present embodiment sends and receives overlap data to and from the adjacent PEs 12 for performing the Fuse execution.

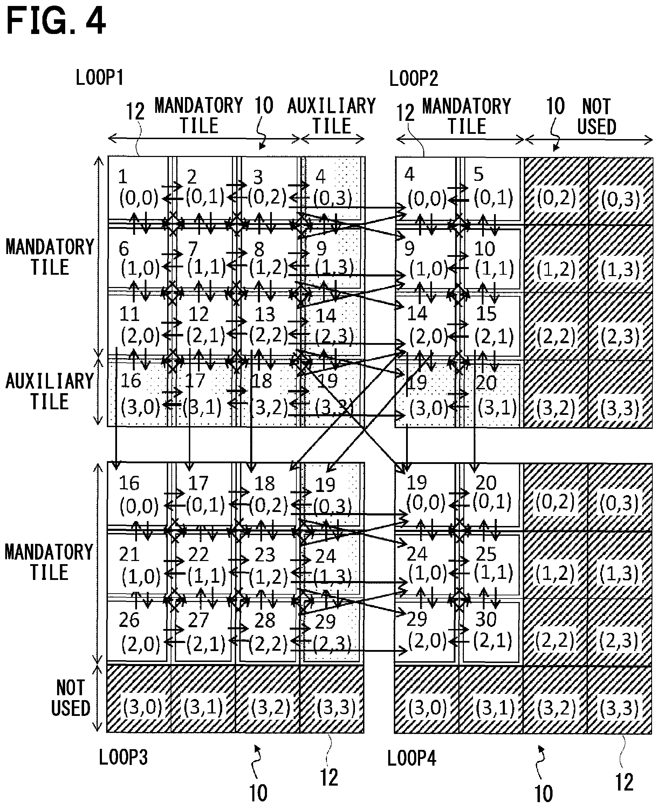

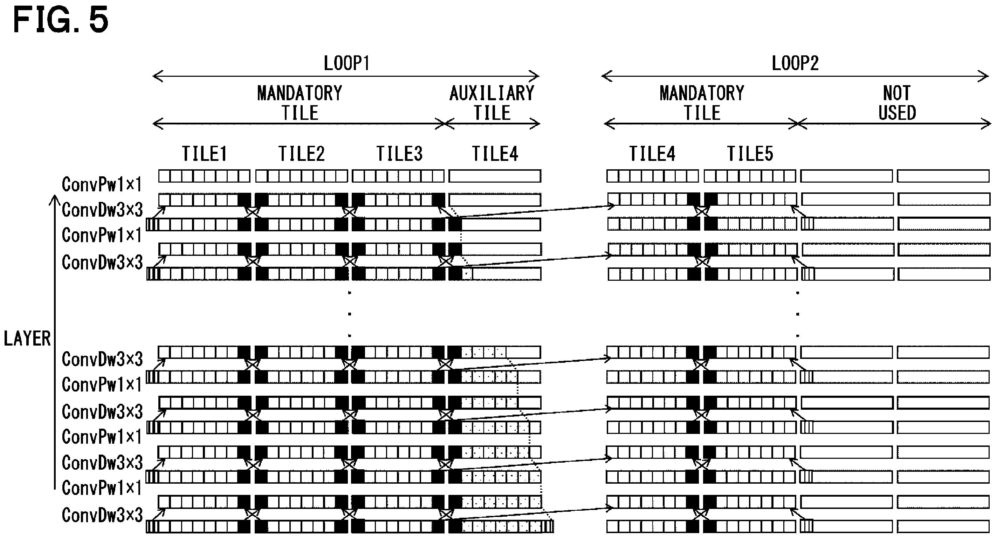

The loop process of the present embodiment is described with reference to FIG. 4 and FIG. 5. FIG. 4 is a schematic diagram showing tile assignment to the PEs 12. FIG. 5 is a schematic diagram showing exchange of overlap data from the start layer to the last layer.

In FIG. 4, the calculation device 10 shown in loop 1 through loop 4 is identical device, and the operations are performed in the order of loop 1, loop 2, loop 3, and loop 4. As an example, the calculation device 10 in the present embodiment includes 16 PEs 12 that are arranged in a two-dimensional array with 4 rows and 4 columns. In the example shown in FIG. 4, the input data, which is image data, is divided into 30 tiles of 6 rows and 5 columns. In FIG. 4, the index number indicated in each PE 12 corresponds to each divided tile, and each PE 12 is assigned with the tile indicated by the index number and performs the convolution operation. The two-dimensional array of tiles corresponds to the location of input data, which is the image data.

In the calculation device 1- according to the present embodiment, when the number of tiles is larger than the number of PEs 12, the number of loops is set according to the number of tiles. Then, the tiles are assigned to the PEs 12 such that the adjacent relationship of multiple PEs 12 match the adjacent relationship of multiple tiles and operations are performed on different tiles in each loop. After the multiple PEs 12 complete all layer operations to the assigned tiles in the current loop, the multiple PEs perform all layer operations to the assigned tiles in the next loop. This configuration allows the calculation device 10 to perform convolution operations on all of the tiles, even when the number of tiles is larger than the number of PEs 12.

The multiple PEs 12 in the present embodiment are divided into two groups, that is, a mandatory tile group and an auxiliary tile group. In the following description, tiles included in the mandatory tile group are referred to as mandatory tiles, and tiles included in the auxiliary tile group are referred to as auxiliary tiles.

The auxiliary tile group includes multiple PEs 12 arranged in periphery areas of the two-dimensional array of PEs 12. In the example shown in FIG. 4, the PEs 12 located in the rightmost column and bottom row correspond to the auxiliary tile group. The tiles included in the auxiliary tile group are only used to calculate the overlap data required by the operations on adjacent tiles included in the mandatory tile group. The tiles included in the auxiliary tile group are included in the mandatory tile group in the next loop.

Among the PEs 12 arranged in two-dimensional array, the PEs 12 located in periphery area of the array do not include the PE 12 that sends or receives the overlap data. Therefore, in each loop, some PEs 12 do not send and receive overlap data which is originally required, thereby degrading the accuracy of convolution operation. In the present embodiment, the PEs 12 in the auxiliary tile group located in the periphery area of the two-dimensional array of PEs 12 are used only to calculate the overlap data of the adjacent PE 12. This configuration improves the accuracy of convolution operation in each loop, since there are no PEs 12 in the mandatory tile group that cannot send and receive the overlap data. The tiles that are used only to calculate the overlap data in the previous loop are included in the mandatory tile group for calculation in the current and subsequent loops.

Depending on the assignment of tiles to the PEs 12, there may be some PEs 12 where no tiles are assigned and no operations are performed. Such PEs 12 will be remained as unused.

When a tile is located at the periphery of mandatory tile group and a tile to which the overlap data is to be sent is operated in the next loop, the overlap data cannot be sent directly.

When the tile adjacent to the tile being currently operated is included in the next and subsequent loops, the overlap data calculated layer-by-layer operation of the tile being currently operated is stored in the external memory 14. Then, the tiles to be calculated in the next and subsequent loops are calculated using the corresponding overlap data for each layer stored in the external memory 14. Thus, by storing the overlap data in the external memory 14, the overlap data calculated in the previous loop can be used in the next and subsequent loops, eliminating the need to calculate the overlap data between current loop and the next loop.

The following will describe the exchange of overlap data between tiles according to the present embodiment, that is, sending and receiving of overlap data between the PEs 12 with reference to FIG. 4 and FIG. 5.

The arrows between two adjacent tiles in the loop shown in FIG. 4 represent the exchange of overlap data between two adjacent tiles in the same loop. The arrows between two different loops indicate sending of overlap data through the external memory 14.

In FIG. 5, sending and reception of overlap data between the PEs 12 located at the upper end of the two-dimensional array of multiple PEs 12 is shown in the layer direction. In FIG. 5, the lower side indicates the operation in the start layer and the upper side indicates the operation in the end layer.

As shown in FIG. 4 and FIG. 5, as an example, in loop 1, tile 3 in the mandatory tile group exchanges overlap data with the adjacent tile 2 and also exchanges the overlap data with the adjacent tile 4 of the auxiliary tile group while performing the convolution operation by Fuse execution. The tile 3 stores the overlap data exchanged with the adjacent tile 4 of the auxiliary tile group in the external memory 14 each time a single layer operation is completed. In loop 2, the tile 4, which is included in the mandatory tile group, receives the overlap data corresponding to each layer from the external memory 14 and exchanges the overlap data with the adjacent tile 5, while performing the convolution operation by Fuse execution. The final operation result of each tile obtained by performing Fuse execution to each tile is also stored in the external memory 14.

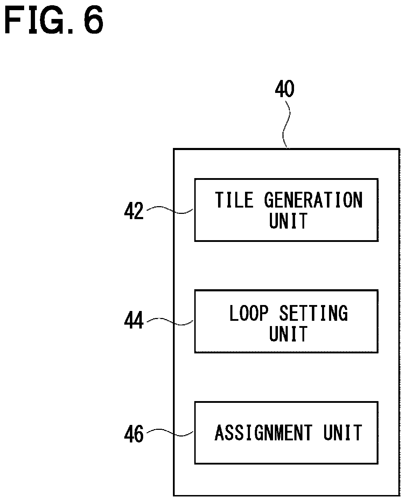

FIG. 6 shows a functional block diagram of an information processing device 40 that performs a tile assignment process for the PEs 12. After determining the tile assignment, the information processing device 40 inputs the tile assignment to the calculation device 10, for assigning the tiles to the PEs 12 to perform the CNN with Fuse execution.

The information processing device 40 includes a tile generation unit 42, a loop setting unit 44, and an assignment unit 46.

The tile generation unit 42 divides input data, such as image data into multiple tiles.

The loop setting unit 44 sets the number of loops according to the number of tiles and the number of PEs 12. The method of setting the number of loops may be properly designed. In the example shown in FIG. 4, the tile assignment to the PEs 12 is set to 4 loops according to the locations of tiles in the input data.

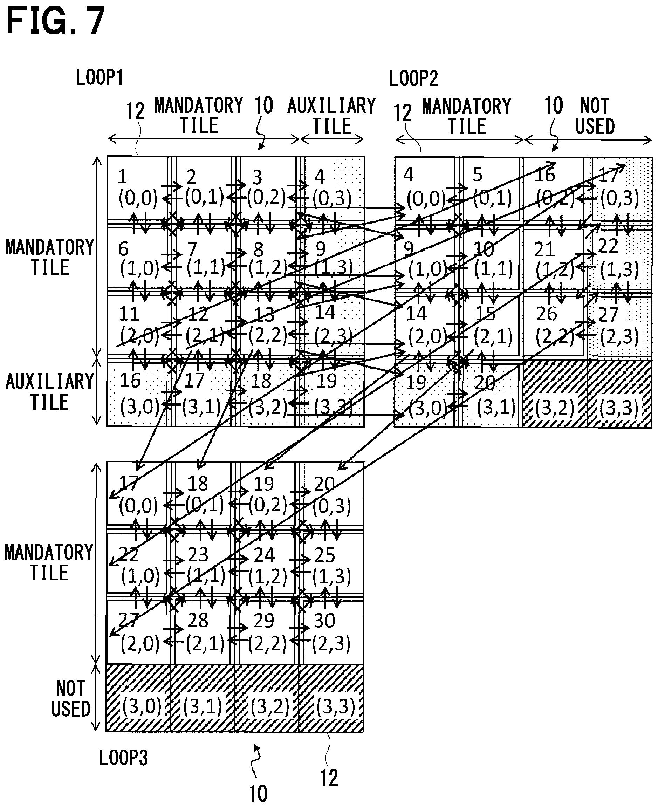

In the example shown in FIG. 4, half of the PEs 12 included in loop 2 and loop 4 are not used. As shown in the example of FIG. 7, tiles 16, 21, and 26 in loop 3 of FIG. 4 may be assigned to the left column of the unused PEs 12 of loop 2 as the mandatory tile group, and tiles 17, 22, and 27 of FIG. 4 may be assigned to the right column of unused PEs 12 of loop 2 as the auxiliary tile group. The tiles 17 to 20, 22 to 25, and 27 to 30 may be assigned to loop 3 as the mandatory tile group. With this assignment, the number of loops can be decreased to 3. Note that the tiles 17, 22, and 27 assigned to the loop 2 do not exchange the overlap data with the adjacent tiles 5, 10, and 15. The overlap data required by the operation of tiles 17 to 20, 22, and 27 in the loop 3 are stored in external memory 14.

The assignment unit 46 determines the assignment of tiles to the PEs 12 according to the number of loops determined by the loop setting unit 44. The assignment unit 46 assigns the tiles, which correspond to the operation targets in each loop, to the PEs 12. The assignment unit 46 also determines the mandatory tiles and the auxiliary tiles.

In the present embodiment, tiles are divided into mandatory tile group and auxiliary tile group. As another example, the auxiliary tile group may not be set. When the auxiliary tile group is not set, some of the necessary overlap data may not be obtained, but the number of loops can be reduced. Thus, the execution duration required for the CNN can be reduced.

In the first embodiment described above, the tiles are generated based on the input data by the tile generation unit 42 of the information processing device 40, and tiles are assigned to the PEs 12 by the assignment unit 46.

### (Third Embodiment)

The following will describe a third embodiment of the present disclosure.

In the second embodiment, the external memory 14 is used to exchange the overlap data between two adjacent loops. In the present embodiment, the external memory 14 is not used to exchange the overlap data between two adjacent loops.

In the present embodiment, the PEs 12 that performs operations on the tiles, which are included in the auxiliary tile group in the current loop and to be included in the mandatory tile group in the next loop, are moved to another end virtually, keeping the tiles in the next loop. The other PEs 12 are also virtually reversed in location as a result of the movement of PEs, and operations of new tiles are performed. In the following description, the virtual movement and reversal of PEs 12 is referred to as a flip.

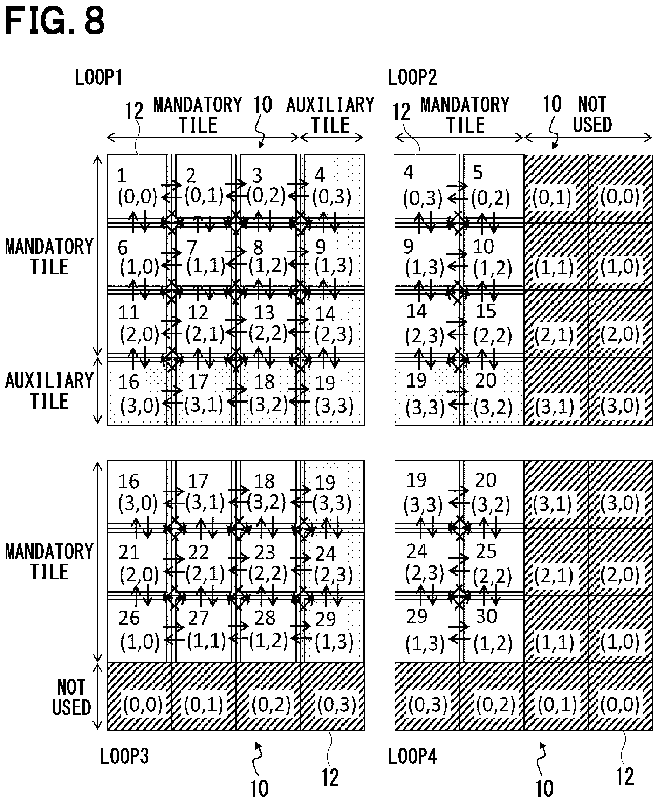

The following will describe the flip according to the present embodiment with reference to FIG. 8. Similar to FIG. 4, the index number in each PE 12 indicates the tile assigned to each PE 12 in FIG. 8. In each PE 12, the index number indicated by (n, m) indicates the actual location of the PE 12.

In the present embodiment, the adjacent relationship of each tile and the adjacent relationship of each PE 12 is correlated with one another in the loop 1. The PEs 12 that calculates the tiles included in the auxiliary tile group in loop 1 and calculates the tiles included in the mandatory tile group in loop 2 are the PEs 12 of (0, 3) to (3, 3), which are the PEs included in the fourth column, that is, the rightmost column in loop 1. Therefore, PEs 12 in locations (0, 3) to (3, 3) virtually move to the other end of loop 2, while maintaining the calculation results of loop 1. The calculation results include the overlap data for each layer of tiles 4, 9, 14, and 19. The PEs 12 in locations of (0, 3) to (3, 3) are virtually located in the rightmost column in the loop 1 and is virtually located in the leftmost column in loop 2. The leftmost column in loop 2 corresponds to the first column.

As the movement of PEs 12 in (0, 3) to (3, 3), other PEs 12 are also virtually reversed in loop 2 from the locations in loop 1. Specifically, the PEs 12 in (0, 2) to (3, 2), which are located in the third column in Loop 1, is virtually located in the second column in Loop 2. New tiles, which are the targets of operation, are assigned to the PEs 12 in (0, 2) to (3, 2).

The PEs 12 in (0, 1) to (3, 1), which are located in the second column in loop 1, are virtually located in the third column of loop 2. The PEs 12 in (0, 0) to (3, 0), which are located in the first column in loop 1, that is, the leftmost column in loop 1, are virtually located in the fourth column, that is, the rightmost column of loop 2. In the example shown in FIG. 8, the third and fourth columns of PEs 12 are not used in loop 2.

The PEs 12, which calculate tiles included in the auxiliary tile group in loop 1 and included in the mandatory tile group in the loop 3, correspond to the PEs 12 in (3, 0) to (3, 3) located at the lower end in the fourth row. The PEs 12 in (3, 0) to (3, 3) are located at the bottom end in loop 1, but in loop 3, the PEs 12 in (3, 0) to (3, 3) are virtually located at the top end of first row. The PEs 12 in (3, 0) to (3, 3) continues to store the calculation results including the overlap data of each layer of tiles 16 to 19 calculated in loop 1 in the internal memory 22 such that the calculation result can be used in loop 3.

As the movement of PEs 12 in (3, 0) to (3, 3) of loop 1 to the new locations of loop 3, other PEs 12 in loop 1 are also virtually reversed in loop 3 from the respective locations in loop 1. Specifically, the PEs 12 in (2, 0) to (2, 3), which are located in the third row in loop 1, are virtually located in the second row in loop 3. The PEs 12 in (1, 0) to (1, 3), which are located in the second row in loop 1, are virtually located in the third row in loop 3. The PEs 12, which are virtually located in the second row and the third row, are assigned with new tiles as the targets of operation.

The PEs 12 in (0, 0) to (0, 3), which are located at the upper end of the first row in loop 1, are virtually located at the lower end of the fourth row in loop 3. In the example shown in FIG. 8, the PEs 12 in the fourth row are not used in loop 3.

The PEs 12 that calculates the tiles included in the auxiliary tile group in loop 3 and calculates the tiles included in the mandatory tile group in loop 4 are the PEs 12 of (3, 3) to (0, 3), which are the PEs virtually located in the fourth column, that is, the rightmost column in loop 3. The PEs 12 in (3, 3) to (0, 0) in loop 3 are virtually located in the leftmost column of the first column in the loop 4. The PEs 12 in (3, 3) to (1, 3) are virtually moved to the leftmost end of loop 4 while maintaining the calculation results of loop 3. The calculation results include the overlap data for each layer of tiles 19, 24, and 29.

As the movement of PEs 12 in (3, 3) to (0, 3) of loop 3 to the new locations of loop 4, other PEs 12 in loop 3 are also virtually reversed in loop 4 from the respective locations in loop 3. Specifically, the PEs 12 in (3, 2) to (0, 2), which are located in the third column in loop 3, is virtually located in the second column in loop 4. New tiles, which are the targets of operation, are assigned to the PEs 12 in (3, 2) to (0, 2).

The PEs 12 in (3, 1) to (0, 1), which are located in the second column in loop 3, are virtually located in the third column of loop 4. The PEs 12 in (3, 0) to (0, 0), which are located in the first column in loop 3, that is, the leftmost column in loop 3, are virtually located in the fourth column, that is, the rightmost column of loop 4. In the example shown in FIG. 8, the third and fourth columns of PEs 12 are not used in loop 4.

The calculation device 10 according to the present embodiment sets the tile locations and the index number of PEs 12 in flipping manner each time switching to new loop. This configuration can eliminate storing of overlap data in the external memory 14, since the locations of PEs 12 are virtually changed such that the results of the tiles that are calculated in the previous loop can be used in the next or subsequent loops.

Although the present disclosure is described with the embodiment and modifications as described above, the technical scope of the present disclosure is not limited to the scope described in the embodiment and modifications described above. Various changes or improvements can be made to the above embodiment and modifications without departing from the spirit of the present disclosure, and other modifications or improvements are also included in the technical scope of the present disclosure.

## Claims

1. A calculation device (10) comprising
a plurality of processing elements (12), each of which performing an arithmetic operation on each of multiple divided data elements,
wherein
the multiple divided data elements are generated by dividing input data input to the calculation device,
each of the plurality of processing elements continuously performs a convolution operation on the corresponding divided data element in each of multiple layers,
each of the plurality of processing elements includes:
an arithmetic unit (20) performing the convolution operation on the corresponding divided data element in each of the multiple layers;
a sender (24) sending data to an adjacent processing element, which is one of the plurality of processing elements; and
a receiver (26) receiving data from the adjacent processing element, and
when the convolution operation is completed in one of the multiple layers, each of the plurality of processing elements sends, to the adjacent processing element, predetermined data necessary for the convolution operation in the subsequent layer and performs the convolution operation in the subsequent layer based on the predetermined data received from the adjacent processing element and calculation result of the previous layer.

2. The calculation device according to claim 1, wherein
each of the multiple divided data elements input to corresponding one of the plurality of processing elements includes data overlapping between adjacent two of the plurality of processing elements to enable the convolution operation by a first layer only among the multiple layers.

3. The calculation device according to claim 1 or 2, wherein
the input data is multi-dimensional array data,
when the number of the multiple divided data elements is larger than the number of the plurality of processing elements, the number of loops is set according to the number of the multiple divided data elements,
the multiple divided data elements are assigned to the plurality of processing elements such that an adjacent relationship of the plurality of processing elements match an adjacent relationship of the multiple divided data elements and the convolution operation are performed on different divided data elements in each of the loops, and
after the plurality of processing elements complete the convolution operation of the assigned divided data elements in all of the multiple layers in one of the loops, the plurality of processing elements perform the convolution operation of the assigned divided data elements in all of the multiple layers in the subsequent loop.

4. The calculation device according to claim 3, wherein
the plurality of processing elements are divided into a first group and a second group,
the second group includes a part of the plurality of processing elements, which are arranged in a periphery region of a two-dimensional arrangement of the plurality of processing elements, and
the multiple divided data elements corresponding to the second group is used only for calculation of the predetermined data, which is needed in calculation of an adjacent divided data element corresponding to the first group.

5. The calculation device according to claim 4, wherein,
when the adjacent divided data element, which is adjacent to the divided data element under operation in the first group, is to be operated in the subsequent loop, the predetermined data obtained from the divided data element under operation in each of the multiple layers is stored in an external memory, and
the adjacent divided data element to be operated in the subsequent loop is operated in the subsequent loop using the predetermined data stored in the external memory.

6. The calculation device according to claim 4, wherein
one of the plurality of processing elements, which is included in the second group and performs the convolution operation on the divided data element in the previous loop and is included in the first group and performs the convolution operation on the divided data element in the subsequent loop, is virtually moved to another end of the two-dimensional arrangement of the plurality of processing elements with the divided data element being maintained, and
a location of another one of the plurality of processing elements is virtually reversed corresponding to the movement of the one of the plurality of processing elements to perform the convolution operation on the corresponding divided data element.

7. A calculation method executed by a calculation device, the calculation device including a plurality of processing elements each of which performing an arithmetic operation on each of multiple divided data elements, the multiple divided data elements being generated by dividing input data input to the calculation device, each of the plurality of processing elements continuously performing a convolution operation on the corresponding divided data element in each of multiple layers, the calculation method comprising:
a first process in which each of the plurality of processing elements performs the convolution operation on the corresponding divided data element input to each of the plurality of processing elements in each of the multiple layers;
a second process of sending, to an adjacent processing element which is one of the plurality of processing elements, predetermined data necessary for the convolution operation in the subsequent layer every time the convolution operation is completed in one of the multiple layers; and
a third process in which each of the plurality of processing elements performs the convolution operation in the subsequent layer based on the predetermined data received from the adjacent processing element and calculation result of the previous layer.
